# EUROPEAN PATENT SPECIFICATION

(11) **EP 2 524 800 B1**
(45) Date of publication and mention of the grant of the patent: **30.03.2016**
(21) Application number: 10842815.2
(22) Date of filing: 30.11.2010
(51) Int. Cl.: C08J 9/36, C08J 9/40

(54) **FLAME RETARDANT POLYMERIC FOAM MATERIAL AND MANUFACTURING METHOD THEREOF**
FLAMMHEMMENDES POLYMERSCHAUMMATERIAL UND HERSTELLUNGSVERFAHREN DAFÜR
MATÉRIAU EN MOUSSE POLYMÈRE IGNIFUGEANT ET SON PROCÉDÉ DE FABRICATION

(30) Priority: 12.01.2010 CN 201010018136
(43) Date of publication of application: 21.11.2012
(73) Proprietor: Sheng, Yajun, Jiangsu 222042 (CN)
(72) Inventor: Sheng, Yajun, Jiangsu 222042 (CN)
(74) Representative: ProI European Patent Attorneys
(86) International application number: PCT/CN2010/001932
(87) International publication number: WO 2011/085531

(56) References cited:
- CN-A- 101 096 599
- CN-A- 101 151 311
- CN-U- 201 587 152
- US-A1- 2007 259 980
- DATABASE WPI Week 201077 Thomson Scientific, London, GB; AN 2010-N19665 XP002720905, -& CN 201 587 152 U (SHENG Y) 22 September 2010 (2010-09-22)

## Description

### Technical Field

The invention relates to a foam material and in particular a flame retardant polymeric foam material. The invention also relates to a method of manufacturing the flame retardant polymeric foam material.

### Background Technology

Polymeric foam plastics are aggregates formed by dispersing air in solid polymers. Due to their excellent properties, such as light weight, good thermal insulation, good cushioning, good electrical insulation, good chemical resistance, and low cost, polymeric foam plastics are widely used in construction, packaging, industry, agriculture, transportation, military and aerospace industries, and the application fields are continually expanding. The market demand for polymeric foam plastics has been increasing rapidly in the recent years. The most commonly used polymeric foam materials include polyurethane (PU) foam plastics, polystyrene (PS) foam plastics, polypropylene (PP) foam plastics, polyvinyl chloride foam plastics and polyethylene (PE) foam plastics.

Polymeric foam plastics exist in various forms, particular in forms of foam sheets and films. A disadvantage of polymeric forms produced by molding and extrusion manufacturing processes is that they are flammable. Taking the extruded foaming polystyrene foam plastic (XPS) as an example, XPS is an excellent thermal insulating material; the XPS boards are often used for building insulation, particularly for high buildings. However, due to their high flammability, every year the economic loss due to building fire is significant. The national legislation has required such materials to meeting more stringent flame retardancy requirements, and there is an increasing demand for improving the flame retardant properties of these polymeric foams.

A common way to improve the flame retardant properties of polymeric forms is to add one or more flame retardants additives during the foam manufacturing process, wherein halogenated organic compounds and organic phosphate esters are the most common additives used, for example, hexabromocyclododecane (HBCD) has been widely incorporated into polystyrene polymeric foam plastics, and halogenated phosphate ester compounds and phosphate esters have been widely incorporated into polyurethane foam plastics.

Patent Application No. WO91/19758 describes the limited flame retardancy of HBCD and discloses a method of improving the flame retardancy known in the prior art, wherein a mixture of aliphatic bromide compounds, especially HBCD, and aromatic bromide compounds such as decaboromodiphenyl ether is used as a flame retardant for PS foams. US Patent No. 6,579,911 discloses a method of improving flame retardancy efficiency known in the prior art by applying using HBCD, phosphate ester or phosphorus compound and flow promotors to improve the flame retardancy efficiency of prior art materials. Chinese Patent Application No. 99814260.3 discloses a method of manufacturing flame retardant polystyrene polymeric foams with expandable graphites and phosphorus compounds.

A serious problem associated with adding HBCD into XPS during the foam manufacturing processes is the easy decomposition of the flame retardant. The decomposition may cause the corrosion of the equipment as well as the decrease of the flame retardant properties. US5,639,799 and US5,717,001 disclose methods of improving thermal stability of HBCD for application in polystyrene foams.

Another problem which must be paid attention to when flame retardants are added into polymeric foams is that the amounts of the flame retardant additive and synergist added must be controlled strictly. At high loading levels, such additives may negatively affect the structural qualities and surface qualities of the foams and reduce their strength or insulating properties. In non-foamed polymeric compositions, the typical loading levels of the flame retardant additives are significantly higher than those in foamed compositions. Therefore, the flame retardants used for polymeric foam compositions must be of high efficiency and small amount. Current available technologies in the art cannot solve this dilemma. Chinese Patent No. 200610028214.5 discloses a water-soluble flame retardant comprising several inorganic salts, wherein the flame retardant is incorporated into the polymeric foams by adding inorganic salts during the foam manufacturing process or by impregnating pre-manufactured polymeric foams into the inorganic salt solution. The flame retardants are thus distributed on the surface of or inside the polymeric foams. In the prior art, a water-soluble fire-preventing interface coating is also known which comprises several inorganic flame retardants and polymer interface agent. The interface coating was applied to the surface of the XPS board to enhance the flame retardancy of the XPS board. However, the water-soluble flame retardant has several drawbacks: The composition of this water-soluble flame retardant is complicated and the process to apply it is tedious. Further, although the water-soluble flame retardant coating can be solidified and dried, it needs a long drying time, which makes it not suitable for continuous industrial production. The application of the water-soluble flame retardant is therefore limited by the weather. Furthermore, the water-soluble flame retardant will dissolve in water, thus is not suitable for application on outdoor heat-insulating materials. In addition, due to the poor compatibility between the inorganic flame retardants and the organic polymeric foam plastics, the flame retardant coating can easily pulverize or peeling or shedding on the surface of the polymer foams, thus affecting the subsequent use of the foams.

### Summary

An object of the present disclosure is to solve the aforementioned deficiencies of the existing technologies, and to provide a flame retardant polymeric foam with excellent flame retardant properties. The excellent flame retardant properties are simply realized by enhancing the use efficiency of the flame retardants.

A flame retardant polymeric foam material may comprise a polymer foam plastics and one or more layers of an organic flame retardant applied to at least a part of a surface of the polymeric foam. The one or more layers of the organic flame retardant may be applied to the surface of the polymeric foam by spraying a melted organic flame retardant, coating the melted organic flame retardant, or impregnating the polymeric foam in the melted organic flame retardant.

In one embodiment, a concentration of the organic flame retardant may be between about 5 % and about 60 % by weight of the flame retardant polymeric foam, preferably between about 10 % and about 40 % by weight, and more preferably between about 15 % and 30 % by weight.

In one embodiment, the one or more layers of the organic flame retardant applied to the surface of the polymeric foam may comprise an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, a glass fiber, or a mixture thereof.

In one embodiment, the polymeric foam may comprise a polystyrene foam, a polyurethane foam, a polypropylene foam, a polyethylene foam, or a polyvinyl chloride foam, or a mixture thereof.

In one embodiment, the polystyrene polymeric foam may comprise an expanded polystyrene foam (EPS), an extruded polystyrene foam (XPS), or both; and the polyurethane foam may be a rigid polyurethane foam.

In one embodiment, the organic flame retardant may comprise an organic phosphorus flame retardant, a brominated flame retardant, or both.

In one embodiment, the organic phosphorus flame retardant may comprise triphenyl phosphate, alkylated triphenyl phosphate, or both.

In one embodiment, the brominated flame retardant may be bisphenol epoxy resin with an epoxy equivalent weight of about 300 g/eq. to about 600 g/eq. and a bromine content of about 20 % to 52 %, preferably with an epoxy equivalent weight of about 330 g/eq. to about 420 g/eq. and a bromine content of about 46 % to 50 %.

In particular, a method of manufacturing a flame retardant polymeric foam is provided according to independent claim 1. The method of manufacturing a flame retardant polymeric foam comprises heating an organic flame retardant till the organic flame retardant melts to afford a melted organic flame retardant, the organic flame retardant having a melting point or a softening point between 30 °C and 80 °C, and applying the melted organic flame retardant to at least a portion of a surface of a polymeric foam to afford the flame retardant polymeric foam. Applying the melted organic flame retardant to at least a portion of the surface of the polymeric foam comprises spraying the melted organic flame retardant or coating the melted organic flame retardant on the at least a portion of the surface of the polymeric foam, or impregnating the polymeric foam in the melted organic flame retardant.

In one embodiment, a concentration of the organic flame retardant in the flame retardant polymeric foam may be between about 5 % and about 60 % by weight of the foam material, preferably between about 10 % and about 40 % by weight, and more preferably between about 15 % and 30 % by weight.

In one embodiment, the polymeric foam may comprise a polystyrene foam, a polyurethane foam, a polypropylene foam, a polyethylene foam, a polyvinyl chloride foam, or a mixture thereof.

In one embodiment, the organic flame retardant may comprise an organic phosphorus flame retardant, a brominated flame retardant, or both.

In one embodiment, the method of manufacturing a flame retardant polymeric foam may further comprise spreading an additional ingredient on the surface of the polymeric foam coated with the organic inflammable retardant.

In one embodiment, the additional ingredient may comprise an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, a glass fiber, or a mixture thereof.

In another aspect, a method of manufacturing a flame retardant polymeric foam comprises mixing an organic flame retardant with an additional ingredient to form a first mixture, the organic flame retardant having a melting point or a softening point between 30°C and 80°C, heating the first mixture till the organic flame retardant melts to afford a second mixture containing a melted organic flame retardant, and applying the second mixture containing the melted organic flame retardant to at least a portion of a surface of a polymeric foam to afford the flame retardant polymeric foam. Applying the second mixture containing the melted organic flame retardant to at least a portion of the surface of the polymeric foam comprises spraying or coating the second mixture containing the melted organic flame retardant on at least a portion of the surface of the polymeric foam, or impregnating the polymeric foam in the second mixture containing the melted organic flame retardant.

In one embodiment, a concentration of the organic flame retardant in the flame retardant polymeric foam material may be between about 5 % and about 60 % by weight of the foam material, preferably between about 10 % and about 40 % by weight, and more preferably between about 15 % and 30 % by weight.

In one embodiment, the polymeric foam may comprise a polystyrene foam, a polyurethane foam, a polypropylene foam, a polyethylene foam, a polyvinyl chloride foam, or a mixture thereof.

In one embodiment, the organic flame retardant may comprise an organic phosphorus flame retardant, a brominated flame retardant, or both.

In one embodiment, the additional ingredient may comprise an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, a glass fiber, or a mixture thereof.

To solve the deficiencies of the existing technology, the present invention provides a flame-retardant polymeric foam which can be easily manufactured and which greatly improves the efficiency of flame retardant materials. The flame retardant polymeric foam features excellent flame retardant properties.

The present invention also provides a method for manufacturing the above-mentioned flame retardant polymeric foam.

The invention can be realized as follows: A flame retardant polymeric foam is provided, wherein the foam may comprise a polymer foam plastic and one or more layers of an organic flame retardant applied to a surface of the polymeric foam.

Said the one or more layers of the organic flame retardant may be applied to the surface of the polymer foam by means of spraying, coating a melted organic flame retardant or impregnating the polymeric form in the melted organic flame retardant.

In the context of the invention, the above-mentioned surface comprises a part of the surface of the polymeric foam or a cladding full-covered surface.

The organic flame retardant used in the invention refers to materials in which a major component is organic flame retardant. The organic flame retardant can be a single organic flame retardant or a compound of one or more organic flame retardants; the organic flame retardant may further comprise certain additive(s).

With respect to the melted organic flame retardant of the invention, the organic flame retardant may be completely melted or partly melted as long as the organic flame retardant can be applied to the surface of the polymeric foam by means of spraying, coating or impregnating. Generally, a satisfactory spraying, coating or impregnating effect can be obtained if at least 40% of the organic flame retardant is melted.

In one embodiment, the flame retardant polymeric foam mentioned above may be characterized by that a concentration of the organic flame retardant may be between about 5% and about 60% by weight of the flame retardant polymeric foam, preferably between about 10% and about 40% by weight, and more preferably between about 15% and 30% by weight.

In one embodiment, the flame retardant polymeric foam mentioned above may be characterized in that the one or more layers of the organic flame retardant applied to the surface of the polymeric foam may comprise one or more of materials as follows: an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, and a glass fiber. The incorporation of such materials provides various advantages: Some of the materials, such as quartz sand, talcum powder, filler and so on, can enhance surface roughness and thus can thus facilitate the use of the product of the invention; some of the materials, such as hot melt adhesive, polymer powder, interface agent, glass fiber and so on, can enhance the adhesion between the one or more organic flame retardant layers and the polymeric foam; some of the materials, such as organic flame retardant HBCD, BDDP, TBBPA, DBDPE, chlorinated paraffin, inorganic flame retardant magnesium hydroxide, aluminum hydroxide, microencapsulated red phosphorus, cyanuric acid, ammonium polyphosphate, MCA, antimony oxide and so on, can enhance the flame retardancy effect or reduce cost. The variety and amount of the above-mentioned materials to be added can be properly selected according to needs.

In one embodiment, the flame retardant polymeric foam mentioned above may comprise one or more of a polystyrene polymeric foam, a polyurethane foam, a polypropylene foam, a polyethylene foam or a polyvinyl chloride foam.

In one embodiment, the above-mentioned flame retardant polymeric foam may be characterized in that said polystyrene polymeric foam may comprise an expanded polystyrene foam (EPS) and/or an extruded foaming polystyrene polymeric foam (XPS); and said polyurethane foam may be a rigid polyurethane foam.

In one embodiment, the above-mentioned flame retardant polymeric foam may be characterized in that said organic flame retardants may comprise an organic phosphorus flame retardants and/or a brominated flame retardants. The organic phosphorus flame retardant may comprise a triphenyl phosphate and/or an alkylated triphenyl phosphate.

In one embodiment, the above-mentioned flame retardant polymeric foam may be characterized by that said brominated flame retardant may comprise a bisphenol epoxy resin with an epoxy equivalent weight of about 300g/eq. to about 600g/eq., a bromine content of about 20% to about 52%; preferably the bisphenol epoxy resin is with an epoxy equivalent weight of about 330g/eq. to about 420g/eq., a bromine content of about 46% to about 50%.

The invention discloses a method of manufacturing a flame retardant polymeric foam according to any one of the above-mentioned. The method may comprise heating an organic flame retardant to melt, or adding a proper amount of one or more of the following materials into the organic flame retardant and mixing them evenly to obtain an organic flame retardant mixture; said one or more materials selected from an inorganic flame retardant, a flame retardant synergist, a pigment, a dye, a filler, a talcum powder, a quartz sand, a cement, an interfacial agent, a diluent, thickener, a binder, a compatilizer, a heat stabilizer, a surfactant or a glass fiber. Then, the organic flame retardant or the organic flame retardant mixture is heated till melted and then applied onto a surface of the polymeric foam by means of spraying, coating or impregnating to form one or more layers of organic flame retardant. Cooling, drying may be performed to obtain the flame retardant polymeric foam.

The invention discloses a method of manufacturing a flame retardant polymeric foam according to independent claim 1 as well as a method of manufacturing a flame retardant polymeric foam according to independent claim 3.

Several embodiments of the methods according to the independent claims are recited in the dependent claims.

The polymeric foams in the present invention refer to the meaning of the broadest range and relates to polymeric forms of any shape, length, thickness, density or their composites. The polymeric foam is preferably at least one selected from polystyrene foam, polypropylene foam, polyethylene foam, polyurethane foam; more preferably is polystyrene foam, including but not limited to expanded polystyrene foam (EPS), extruded polystyrene foam (XPS); and most preferably is extruded polystyrene foam. The manufacturing methods thereof are known in related art. The invention does not limit types of manufacturing equipment, raw materials, and foaming agents. It should be noted that in some implementations, the pre-manufactured polymeric foams may already contain certain flame retardants and all of them also falls within the scope of the invention.

There are many types of flame retardants, among which halogenated organic compounds and organic phosphate esters are the most common types. For example, HBCD is widely used in the polystyrene foams, and halogenated phosphate ester compounds and phosphate ester flame retardants are widely used in polyurethane foams. The organic flame retardants employed in the invention can be a single substance as well as a mixture of several substances,. The melting point or the softening point of these organic flame retardants may be between about 30°C and about 80 °C.

Organic-based flame retardants are preferred in the invention since they have good compatibility with the polymeric foams which is also of organic material. The organic-based flame retardants can be tightly bound with the polymeric foams. In addition, during the subsequent application of the flame retardant polymeric foam coated with organic flame retardant, the organic flame retardant coating on the surface of the polymeric foam also has a good compatibility with the commonly used interface agents, thus it usually has less influences on the subsequent use of the flame retardant polymeric foam.

Although a flame retardant which is in a liquid form at ambient temperature can be easily coated on the surface of the foam product to improve the foam product's flame retardancy, such a flame retardant may affect the subsequent application of the foam product as it cannot be solidified and dried. Therefore, flame retardants having a melting point or a softening point of between about 30°C and about 80°C are applied in the present invention. The flame retardants of the invention are not limited to a single substance; a mixture of flame retardants also falls within the scope of the claims as long as a melting point or a softening point thereof is between about 30°C and about 80°C. The flame retardants of the present invention are preferably selected from but not limited to organic phosphorus flame retardant, brominated flame retardant and any mixture thereof, including but not limited to at least one of following: triphenyl phosphate, alkylated triphenyl phosphate, and any mixture thereof; preferably triphenyl phosphate and/or preferably bisphenol epoxy resin with epoxy equivalent weight of about 300g/eq to about 600g/eq, bromine content of about 20% to about 52%.

An above-mentioned organic flame retardant may be melted by means such as heating. The melted flame retardant may be applied to the surface of the polymeric foam by means of spraying, coating or impregnating. Finally, the finished product can be obtained after cooling, drying. The application method of the flame retardants to the polymeric foam is not the key point of the invention; the flame retardants can be applied to the surface of the polymeric foam by any method known in the field. For example, the flame retardants can be distributed and/or coated on the polymeric foam by means of spraying, impregnating and so on. They can also be applied to the polymeric foam by coating machines using rolls and chill rolls, "blade" coating, extrusion coating, friction coating, coating, spraying, foaming and other similar methods. As mentioned above, the amount of the flame retardant applied on the polymeric foam should be high enough to render the polymeric foam sufficient flame retardancy. After the flame retardant is applied, the flame retardant coating can be cooled by blasting or any other method that can solidify the flame retardant coating on the polymeric foam. Single-layer or multiple-layer flame retardant can be formed on the surface of the polymeric foam.

The flame retardant applied on the polymeric foam surface may optionally comprise additional ingredients, such as one or more other flame retardants, pigments, dyes, fillers, talcum powders, quartz sands, cements, interfacial agents, diluents, thickeners, binders, compatilizers, heat stabilizers, surfactants or glass fibers and so on. The additional ingredients can be incorporated on the polymeric foam surface together with the preferred flame retardant of the present invention by using a mixture of the preferred flame retardant and the additional ingredients, or by being scattered onto the polymeric foam surface. These additional ingredients may change the color of the surface of the polymeric foam, enhance the adhesion between the flame retardant coating and the polymeric foam, reduce cost, and so on.

By selecting those types of flame retardants which are very effective in improving the flame retardency of the polymeric foams, in particular those effective for extruded polystyrene foams, the present invention provides a simple and effective approach to manufacture polymeric foams with outstanding flame retardant properties. The present invention can increase amount of the flame retardants without sacrificing the foaming performance, the strength, and the insulation performance of the polymeric foam product. Different flame retardancy requirements can be satisfied by flexibly varying the amount of the flame retardants applied on the polymeric foam surface.

Surprisingly, when using triphenyl phosphate (TPP) as the preferred flame retardant of the invention, the polymeric foam coated with the TPP exhibits superior flame retardancy when compared with a polymeric foam having the same amount of TPP additive distributed inside the foam. This could be attributed to higher unit concentration of the flame retardant on the surface of the polymeric foam than the unit concentration of the flame retardant distributed inside the foam. When the foam product is in contact with the flame, the flame retardant coated on the surface of the foam product first separates the flame from the foam product. Meanwhile, since the polymeric foam contracts under high temperature, the concentration of the flame retardant on the foam surface is further increased, as a result, the self-extinguish ability is enhanced.

The method of manufacturing the flame retardant polymeric foams of the invention is simple and feasible. The solidification time of the flame retardant coating is also short. Thus the method is suitable for industrial application. The resulting polymeric foams exhibit excellent flame retardancy while maintain the same foaming performance, the strength, and the insulation properties as those without the flame retardant coating. A high level of flame retardant can provide sufficient flame retardancy. In addition, the amount of the flame retardant can be easily varied to meet different flame retardancy requirements.

### Detailed Embodiments

For the purpose of illustrating and not limiting, exemplary embodiments are described as follows.
Embodiment 1. A flame retardant polymeric foam material is provided. It comprises a polymer foam plastics and one or more layers of organic flame retardant applied to a surface of the polymeric foam. The one or more layers of organic flame retardant is applied to the surface of the polymer foam by means of spraying, coating or impregnating, after the organic flame retardant is melted.
Embodiment 2. In the flame retardant polymeric foam according to Embodiment 1, a concentration of the organic flame retardant is about 5% or more by weight of the flame retardant polymeric foam.
Embodiment 3. In the flame retardant polymeric foam according to Embodiment 1, a concentration of the organic flame retardant is about 60% or less by weight of the flame retardant polymeric foam.
Embodiment 4. In the flame retardant polymeric foam according to Embodiment 1, a concentration of the organic flame retardant is about 10% or more by weight of the flame retardant polymeric foam.
Embodiment 5. In the flame retardant polymeric foam according to Embodiment 1, a concentration of the organic flame retardant is about 40% or less by weight of the flame retardant polymeric foam.
Embodiment 6. In the flame retardant polymeric foam according to Embodiment 1, a concentration of the organic flame retardant is about 30% or less by weight of the flame retardant polymeric foam.
Embodiment 7. In the flame retardant polymeric foam according to Embodiment 1, a concentration of the organic flame retardant is about 15% or more by weight of the flame retardant polymeric foam.
Embodiment 8. In the flame retardant polymeric foam material according to any one of Embodiments 1 ∼ 7, the one or more layers of organic flame retardant applied to the surface of the polymeric foam further comprises one or more of the following materials: an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, and a glass fiber.
Embodiment 9. In the flame retardant polymeric foam according to any one of Embodiments 1 ∼ 8, the polymeric foam comprises one or more plastics selected from the following: polystyrene polymeric foam plastics, polyurethane foam plastics, polypropylene foam plastics, polyethylene foam plastics, and polyvinyl chloride foam plastics.
Embodiment 10. In the flame retardant polymeric foam according to Embodiment 9, said polystyrene polymeric foam plastics comprises an expanded polystyrene foam plastics (EPS) and/or an extruded foaming polystyrene polymeric foam plastics (XPS); said polyurethane foam plastics may compris rigid polyurethane foam plastics.
Embodiment 11. In the flame retardant polymeric foam according to any one of Embodiments 1 ∼ 10, the organic flame regardant has a melting point or a softening point between about 30°C and about 80°C.
Embodiment 12. In the flame retardant polymeric foam according to any one of Embodiments 1 ∼ 11, the one or more layers of organic flame retardant comprise an organic phosphorus flame retardant and/or a brominated flame retardant; the organic phosphorus flame retardant may comprise triphenyl phosphate and/or alkylated triphenyl phosphate.
Embodiment 13. In the flame retardant polymeric foam according to Embodiment 12, said brominated flame retardantmay comprise bisphenol-A epoxy resin with an epoxy equivalent weight from about 300g/eq to about 600g/eq and a bromine content from about 20% to about 52%.
Embodiment 14. In the flame retardant polymeric foam according to Example 12, said brominated flame retardant may comprise bisphenol-A epoxy resin with an epoxy equivalent weight from about 330g/eq to about 420g/eq and a bromine content from about 46% to about 50%.
Embodiment 15. A method of manufacturing a flame retardant polymeric foam according to any one of Embodiments 1 ∼ 14 is provided. The method comprises heating an organic flame retardant to melt, or adding a proper amount of one or more of the following materials into the organic flame retardant and mixing them evenly to obtain an organic flame retardant mixture: an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, and a glass fiber. Then, the organic flame retardant or the organic flame retardant mixture is heated till melted and then applied onto the surface of the polymeric foam by means of spraying, coating or impregnating to form one or more layers of organic flame retardant. Cooling, drying may be performed to obtain the flame retardant polymeric foam.
Embodiment 16. A method of manufacturing said flame retardant polymeric foam according to any one of Embodiments 1 ∼ 14 is provided. The method comprises heating an organic flame retardant to melt; the organic flame retardant is heated till melted and then applied onto the surface of the polymeric foam by means of spraying, coating or impregnating to form one or more layers of organic flame retardant. Before drying the one or more layers of organic flame retardant, applying a proper amount of a mixture onto the one or more layers of organic flame retardant, the mixture comprising one or more materials selected from an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, and a glass fiber. Cooling, drying may be performed to obtain the flame retardant polymeric foam.
Embodiment 17. With respect to manufacturing of the flame retardant polymeric foam, a specific embodiment is as follows: Firstly, heating a flame retardant triphenyl phosphate (e.g. manufactured by Tianjin Lianrui Chemical Co. Ltd.) to 50°C or above so as to melt the retardant triphenyl phosphate to liquid; heating a flame retardant brominated epoxy resin (e.g. Model Number: EX-48) to 60°C or above so as to melt the retardant brominated epoxy resin to liquid; then impregnating a pre-manufactured polymeric foam into the liquid, then taking-out the polymeric foam and drying it to obtain the flame retardant foam; alternatively, adding the liquid flame retardant into a spraying device, spraying the liquid flame retardant onto the surface of the foam to obtain the flame retardant polymeric foam.
Embodiment 18. In the following embodiment, the effectiveness of forming flame retardant coating on the surface of extruded foaming polystyrene foam (XPS), expanded polystyrene foam (EPS), and rigid polyurethane foam from triphenyl phosphate, brominated epoxy resin or mixture thereof is described.

Firstly, heating the flame retardant triphenyl phosphate to 50°C or above so as to melt the triphenyl phosphate to liquid; heating the flame retardant brominated epoxy resin to 60°C or above so as to melt the brominated epoxy resin to liquid; then impregnating the pre-manufactured XPS board in the liquid, then taking-out the XPS board, and drying the XPS board to obtain the flame retardant foam; alternatively, adding the liquid triphenyl phosphate into a spraying device, spraying the liquid flame retardant onto the surface of the XPS board to obtain the flame retardant polymeric foam.

Alternatively, adding solid triphenyl phosphate or brominated epoxy resin flame retardant into a hot-melt sizing machine with a heating device, coating the melted flame retardant onto the surface of the foam by rolling to obtain the flame retardant foam.
Control sample 1: ordinary non-flame retardant XPS (Manufacturer: Nanjing Feininger Company).
Control sample 2: flame retardant XPS (Manufacturer: Nanjing Owens Corning Company).
Control sample 3: ordinary non-flame retardant EPS.
Control sample 4: ordinary non-flame retardant rigid polyurethane foam.

In the following experiment examples for manufacturing flame retardant polymeric foams, unless otherwise indicated, the method thereof is the same as aforesaid methods.
Experiment example 1: control sample 1, spraying 5% triphenyl phosphate on the surface of the ordinary non-flame retardant XPS board.
Experiment example 2: control sample 1, spraying 10% triphenyl phosphate on the surface of the ordinary non-flame retardant XPS board.
Experiment example 3: control sample 2, spraying 5% triphenyl phosphate on the surface of the flame retardant XPS board.
Experiment example 4: control sample 3, coating 30% triphenyl phosphate on the surface of the ordinary non-flame retardant EPS.
Experiment example 5: control sample 4, coating 15% triphenyl phosphate by rolling on the surface of the ordinary non-flame retardant rigid polyurethane foam.
Experiment example 6: control sample 4, spraying 25% triphenyl phosphate on the surface of the ordinary non-flame retardant rigid polyurethane foam.
Experiment example 7: control sample 1, spraying 10% brominated epoxy resin on the surface of the ordinary non-flame XPS board.
Experiment example 8: control sample 1, coating 30% brominated epoxy resin by rolling on the surface of the ordinary non-flame XPS board.
Experiment example 9: control sample 4, coating 15% brominated epoxy resin by rolling on the surface of the ordinary non-flame rigid polyurethane foam.
Experiment example 10: control sample 1, spraying a mixture of 10% triphenyl phosphate and 5% brominated epoxy resin on the surface of the ordinary non-flame XPS board.
Experiment example 11: control sample 3, coating 65% brominated epoxy resin on the surface of the ordinary non-flame retardant EPS.

Assessment methods: the flame retardancy properties of the flame retardant polymeric foams obtained by means of the present invention and commercially available flame retardant and non-flame retardant polymeric foams were tested according to the following methods:
1. Flame retardancy: The flame retardncy was detected in accordance with GB 8626. If the flame retardancy reaches B2 grade standard, it passed the detection, otherwise it failed ("not pass") the detection.
2. Oxygen index: The combustion performance of the flame retardant foam was evaluated under the stated experiment conditions in accordance with the requirements of GB2406 (method of detecting oxygen index).
3. Self-extinguishing (SE): Yes: LOI <≥ 26.0; No: LOI < 26.0.

The assessment results are listed in the following table:

| Number | Flame Retardancy | Oxygen Index (LOI) | Self-extinguishing (SE) |
|---|---|---|---|
| Control sample 1 | Not Pass | 20 | No |
| Control sample 2 | Pass | 24 | No |
| Control sample 3 | Not Pass | 19 | No |
| Control sample 4 | Not Pass | 20 | No |
| Experiment example 1 | Pass | 24 | No |
| Experiment example 2 | Pass | 28 | Yes |
| Experiment example 3 | Pass | 26 | Yes |
| Experiment example 4 | Pass | 32 | Yes |
| Experiment example 5 | Pass | 26 | Yes |
| Experiment example 6 | Pass | 32 | Yes |
| Experiment example 7 | Pass | 30 | Yes |
| Experiment example 8 | Pass | 34 | Yes |
| Experiment example 9 | Pass | 31 | Yes |
| Experiment example 10 | Pass | 32 | Yes |
| Experiment example 11 | Pass | 36 | Yes |

## Claims

1. A method of manufacturing a flame retardant polymeric foam, comprising:
heating an organic flame retardant till the organic flame retardant melts to afford a melted organic flame retardant, the organic flame retardant having a melting point or a softening point between 30 °C and 80 °C; and
applying the melted organic flame retardant to at least a portion of a surface of a polymeric foam to afford the flame retardant polymeric foam,
wherein the applying the melted organic flame retardant to at least a portion of the surface of the polymeric foam comprises spraying the melted organic flame retardant or coating the melted organic flame retardant on the at least a portion of the surface of the polymeric foam, or impregnating the polymeric foam in the melted organic flame retardant.

2. The method of manufacturing a flame retardant polymeric foam according to claim 1, further comprising:
spreading an additional ingredient on the surface of the polymeric foam coated with the organic inflammable retardant.

3. A method of manufacturing a flame retardant polymeric foam, comprising:
mixing an organic flame retardant with an additional ingredient to form a first mixture, the organic flame retardant having a melting point or a softening point between 30 °C and 80 °C;
heating the first mixture till the organic flame retardant melts to afford a second mixture containing a melted organic flame retardant; and
applying the second mixture containing the melted organic flame retardant to at least a portion of a surface of a polymeric foam to afford the flame retardant polymeric foam,
wherein applying the second mixture containing the melted organic flame retardant to at least a portion of the surface of the polymeric foam comprises spraying the second mixture containing the melted organic flame retardant or coating the second mixture containing the melted organic flame retardant on at least a portion of the surface of the polymeric foam, or impregnating the polymeric foam in the second mixture containing the melted organic flame retardant.

4. The method of manufacturing a flame retardant polymeric foam according to any one of claims 1 to 3, wherein a concentration of the organic flame retardant in the flame retardant polymeric foam is between 5% and 60% by weight of the foam material, preferably between 10% and 40% by weight, and more preferably between 15% and 30% by weight.

5. The method of manufacturing a flame retardant polymeric foam according to any one of claims 1 to 3, wherein the polymeric foam comprises a polystyrene foam, a polyurethane foam, a polypropylene foam, a polyethylene foam, a polyvinyl chloride foam, or a mixture thereof.

6. The method of manufacturing a flame retardant polymeric foam according to any one of claims 1 to 3, wherein the organic flame retardant comprises an organic phosphorus flame retardant, a brominated flame retardant, or both.

7. The method of manufacturing a flame retardant polymeric foam according to claim 2 or 3, wherein the additional ingredient comprises an inorganic flame retardant, a flame retardant synergist, a pigment, a dye, a filler, a talcum powder, a quartz sand, a cement, an interfacial agent, a diluent, a thickener, a binder, a compatilizer, a heat stabilizer, a surfactant, a glass fiber, or a mixture thereof.

## Patentansprüche

1. Verfahren zur Herstellung eines flammhemmenden Polymerschaumstoffes, **dadurch gekennzeichnet, dass** ein organisches Flammschutzmittel mit einem Schmelz- oder Erweichungspunkt von zwischen 30° und 80° durch Wärmezufuhr geschmolzen und dem geschmolzenen organischen Flammschutzmittel eine angemessene Menge an anorganischem Flammschutzmittelgemisch zugegeben wird, um durch gleichmäßiges Durchmischen ein organisches Flammschutzmittelgemisch zu erhalten, wobei anschließend das organische Flammschutzmittel oder das organische Flammschutzmittelgemisch bis zum Schmelzen des organischen Flammschutzmittels erwärmt und danach durch Spritz-, Beschichtungs- oder Tauchverfahren an der Oberfläche eines Polymerschaumstoffes anhaften gelassen wird, um eine organische Flammschutzmittelschicht zu erzeugen.

2. Verfahren zur Herstellung eines flammhemmenden Polymerschaumstoffes gemäß Anspruch 1, **dadurch gekennzeichnet, dass** ferner ein zusätzlicher Bestandteil enthalten ist, welcher dem Flammschutzmittel zugegeben und auf die Oberfläche des Polymerschaumes mit aufgetragen werden kann.

3. Verfahren zur Herstellung eines flammhemmenden Polymerschaumstoffes, **dadurch gekennzeichnet, dass** ein organisches Flammschutzmittel mit einem Schmelz- oder Erweichungspunkt von zwischen 30° und 80° und ein zusätzlicher Bestandteil miteinander vermischt werden und so ein erstes Gemisch erzeugt wird, das durch Wärmezufuhr so geschmolzen wird, dass ein das organische Flammschutzmittel enthaltendes zweites Gemisch entsteht, wobei das das organische Flammschutzmittel enthaltende zweite Gemisch bis zum Schmelzen des organischen Flammschutzmittels erwärmt und danach durch Spritz-, Beschichtungs- oder Tauchverfahren an der Oberfläche eines Polymerschaumstoffes anhaften gelassen wird, um eine organische Flammschutzmittelschicht zu erzeugen.

4. Verfahren zur Herstellung eines flammhemmenden Polymerschaumstoffes gemäß einem der Ansprüche 1-3, **dadurch gekennzeichnet, dass** der Anteil an dem organischen Flammschutzmittel 5%-60%, bevorzugt 10%-40%, weiter bevorzugt 15%-30% bezüglich des Gesamtgewichts des flammhemmenden Polymerschaumstoffes beträgt.

5. Verfahren zur Herstellung eines flammhemmenden Polymerschaumstoffes gemäß einem der Ansprüche 1-3, **dadurch gekennzeichnet, dass** als Polymerschaumstoff eines oder mehrere der folgenden Materialien ausgewählt werden: Polystyrolschaumstoff, Polyurethanschaumstoff, Polypropylenschaumstoff, Polyethylenschaumstoff oder Polyvinylchlorid-Schaumstoff.

6. Verfahren zur Herstellung eines flammhemmenden Polymerschaumstoffes gemäß einem der Ansprüche 1-3, **dadurch gekennzeichnet, dass** es sich bei dem organischen Flammschutzmittel um phosphororganische Flammschutzmittel und/oder um bromierte Flammschutzmittel handelt.

7. Verfahren zur Herstellung eines flammhemmenden Polymerschaumstoffes gemäß einem der Ansprüche 2-3, **dadurch gekennzeichnet, dass** der zusätzliche Bestandteil eine der folgenden Substanz oder ein Gemisch aus mehreren der folgenden Substanzen ist: anorganisches Flammschutzmittel, synergistisches Flammschutzmittel, Pigment, Farbstoff, Füllstoff, Talkum, Quarzsand, Zement, grenzflächenaktiver Stoff, Verdünnungsmittel, Verdickungsmittel, Bindemittel, Verträglichkeitsvermittler, Wärmestabilisiermittel, Tensid oder Glasfaser.

## Revendications

1. Un procédé de préparation de matériau de mousse polymère ignifuge, **caractérisé en ce que** l'agent organique ignifuge est chauffé et fondu, le point de fusion ou le point de ramollissement dudit agent ignifuge organique est situé entre 30°C et 80°C ; après avoir fait chauffer et fondre l'agent ignifuge, une certaine quantité de mélange d'agent ignifuge inorganique est ajoutée à l'agent ignifuge organique, un mélange d'agent ignifuge organique est obtenu après mélange homogène, l'agent ignifuge organique ou le mélange d'agent ignifuge organique est ensuite chauffé jusqu'à ce que l'agent ignifuge organique fonde, puis, par procédé de pulvérisation, d'enduction ou d'imprégnation, il est fait adhérer à la surface plastique de la mousse polymère pour constituer un revêtement ignifuge organique.

2. Un procédé de préparation de matériau de mousse polymère ignifuge selon la revendication 1 **caractérisé en ce qu'**il comprend des ingrédients supplémentaires, lesdits ingrédients complémentaires peuvent être placés dans l'agent ignifuge et enduits sur la surface de la mousse polymère.

3. Un procédé de préparation de matériau de mousse polymère ignifuge, **caractérisé en ce que** l'agent ignifuge organique et les ingrédients complémentaires sont mélangés pour former un premier mélange, le point de fusion ou le point de ramollissement dudit agent ignifuge organique est situé entre 30°C et 80°C ; le premier mélange est chauffé et fondu pour former le deuxième mélange contenant l'agent ignifuge organique ; le deuxième mélange contenant l'agent ignifuge organique est chauffé jusqu'à ce que l'agent organique fonde puis, par procédé de pulvérisation, d'enduction ou d'imprégnation, il est fait adhérer à la surface plastique de la mousse polymère pour constituer un revêtement ignifuge organique.

4. Un procédé de préparation de matériau de mousse polymère ignifuge selon l'une quelconque des revendications 1 à 3 **caractérisé en ce que** ledit agent ignifuge organique représente de 5% à 60% le poids total du matériau de mousse polymère ignifuge ; préférablement de 10% à 40% ; plus préférablement de 15% à 30%.

5. Un procédé de préparation de matériau de mousse polymère ignifuge selon l'une quelconque des revendications 1 à 3 **caractérisé en ce que** le matériau de mousse polymère est sélectionné parmi 1 ou 2 des matériaux suivants : matériau de mousse polystyrène, matériau de mousse polyuréthane, matériau de mousse polypropylène, matériau de mousse polyéthylène, matériau de mousse chlorure de poly-vinyle.

6. Un procédé de préparation de matériau de mousse polymère ignifuge selon l'une quelconque des revendications 1 à 3 **caractérisé en ce que** ledit agent ignifuge organique est un agent ignifuge de phosphore organique et/ou un agent ignifuge de brome organique.

7. Un procédé de préparation de matériau de mousse polymère ignifuge selon l'une quelconque des revendications 2 à 3 **caractérisé en ce que** les ingrédients complémentaires peuvent être l'un des ou un mélange de plusieurs des éléments suivants : agents ignifuges organiques, synergistes ignifuges, pigments, teintures, substances de remplissage, talcs, sables de quartz, ciments, agents d'interface, agents diluants, agents épaississants, liants, agents de compatibilité, agents thermostables, agents tensio-actifs ou fibres de verre.
